# FASCICULE DE BREVET EUROPEEN

(11) **EP 3 699 458 B1**
(45) Date de publication et mention de la délivrance du brevet: **03.09.2025**
(21) Numéro de dépôt: 20157588.3
(22) Date de dépôt: 17.02.2020
(51) Int. Cl.: F02C 7/36, F02C 7/06, F01D 25/04, F16H 57/00, F16H 57/04, F16H 57/08

(54) **ENSEMBLE A REDUCTEUR PLANETAIRE POUR UNE TURBOMACHINE**
EINHEIT MIT PLANETENUNTERSETZUNGSGETRIEBE FÜR EIN TURBOTRIEBWERK
ASSEMBLY WITH PLANETARY GEAR FOR A TURBINE ENGINE

(30) Priorité: 20.02.2019 FR 1901704
(43) Date de publication de la demande: 26.08.2020
(73) Titulaire: Safran Transmission Systems, 92700 Colombes (FR)
(72) Inventeur: SIMON, Adrien, Louis, 77550 MOISSY-CRAMAYEL (FR); LEFEBVRE, Simon, Loïc, Clément, 77550 MOISSY-CRAMAYEL (FR)
(74) Mandataire: Gevers & Orès

(56) Documents cités:
- EP-A1- 3 165 739
- JP-A- 2009 058 002
- US-A1- 2011 252 907
- US-A1- 2013 023 378

## Description

### Domaine technique de l'invention

La présente invention concerne le domaine des réducteurs de vitesse à train planétaire pour turbomachines en particulier d'aéronef.

### Arrière-plan technique

L'état de l'art comprend notamment les documents WO-A1-2010/092263, FR-A1-2 987 416, EP-A1-1 464 869, FR-A1-3 041 054 FR-A1-2 853 382, FR-A1-3 052 213, JP-A-2009 058002, US-A1-2013/023378 et US-A1-2011/252907, EP-A1-3 165 739.

Le rôle d'un réducteur mécanique est de modifier le rapport de vitesse et le couple entre l'axe d'entrée et l'axe de sortie d'un mécanisme.

Les nouvelles générations de turbomachines à double flux, notamment celles ayant un haut taux de dilution, comportent un réducteur mécanique pour entraîner l'arbre d'une soufflante (aussi appelé « fan »). De manière usuelle, le réducteur a pour but de transformer la vitesse de rotation dite rapide de l'arbre d'une turbine de puissance en une vitesse de rotation plus lente pour l'arbre entraînant la soufflante.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal X de la turbomachine. Les satellites ont chacun un axe de révolution différents équirépartis sur le même diamètre de fonctionnement autour de l'axe des planétaires. Ces axes sont parallèles à l'axe longitudinal X.

Il existe plusieurs architectures de réducteur. Dans l'état de l'art des turbomachines à double flux, les réducteurs sont de type planétaire ou épicycloïdal. Il existe dans d'autres applications similaires, des architectures dites différentielles ou « compound ».
∘ Sur un réducteur planétaire, le porte-satellites est fixe et la couronne constitue l'arbre de sortie du dispositif qui tourne dans le sens inverse du solaire.
∘ Sur un réducteur épicycloïdal, la couronne est fixe et le porte-satellites constitue l'arbre de sortie du dispositif qui tourne dans le même sens que le solaire.
∘ Sur un réducteur différentiel, aucun élément n'est fixé en rotation. La couronne tourne dans le sens contraire du solaire et du porte-satellites.

Les réducteurs peuvent être composés d'un ou plusieurs étages d'engrènement. Cet engrènement est assuré de différentes façons comme par contact, par friction ou encore par champ magnétique.

Il existe plusieurs types d'engrènement par contact comme avec des dentures droites ou en chevron.

Le porte-satellites d'un réducteur peut se présenter sous la forme d'une cage dans laquelle sont logés le solaire, les satellites, les paliers de guidage des satellites ainsi que des moyens de lubrification des satellites et du solaire. Le solaire comprend des cannelures internes d'accouplement à un premier arbre de la turbomachine et la cage du porte-satellites est solidaire d'un porte-cage qui comprend une portion cylindrique comportant des cannelures externes d'accouplement à un autre arbre.

La liaison de la cage au porte-cage est en général rigide. En variante, on peut envisager une technologie dans laquelle la cage est reliée au porte-cage par des liaisons souples, telles que décrites dans le document EP-A1-1 464 869. Dans un tel cas, le porte-cage comprend une rangée annulaire de doigts axiaux qui sont reliés par des liaisons souples à la cage. Comme évoqué dans ce qui précède, un réducteur planétaire a un porte-satellites fixe et relié à un élément de stator de la turbomachine par des éléments d'interface. La répartition des charges aux différents satellites du réducteur nécessite une certaine flexibilité de ces éléments d'interface. Cette flexibilité va toutefois à l'encontre de la situation dynamique du réducteur dans le moteur.

La présente invention propose un perfectionnement qui apporte une solution simple, efficace et économique à ce problème.

### Résumé de l'invention

L'invention concerne un ensemble comportant un porte-satellites de réducteur de vitesse à train planétaire et un organe annulaire élastiquement déformable et un élément de stator, pour une turbomachine, en particulier d'aéronef,
- le porte-satellites ayant une forme générale annulaire autour d'un axe X, et
- l'organe annulaire s'étendant autour de l'axe X, cet organe étant fixé audit porte-satellites et à l'élément de stator en vue d'assurer une liaison souple entre le porte-satellites et ledit élément de stator,
caractérisé en ce que le porte-satellites porte une série de dents en saillie s'étendant sensiblement radialement vers l'extérieur par rapport audit axe X, chacune de ces dents comportant des premières faces latérales opposées s'étendant dans des plans passant par l'axe X et aptes à coopérer par butée en direction circonférentielle avec ledit élément de stator, des systèmes d'amortissement de vibrations, de type patins d'amortissement de vibration et/ou film d'huile d'amortissement, étant intercalés entre lesdites premières faces et ledit élément de stator.

La présente invention s'applique donc dans le cadre d'un réducteur dit planétaire, c'est-à-dire dont le porte-satellites est relié à un élément de stator de la turbomachine et est donc fixe dans le repère moteur. Cette solution est compatible de tout type de denture du solaire, des satellites et de la couronne. La solution proposée ci-dessous est compatible de tout type de porte-satellites qu'il soit monobloc ou de type cage et porte-cage. Cette solution est enfin compatible de tout type de palier de satellites, qu'il soit composé d'éléments roulants, d'un palier hydrodynamique, etc.

Dans la présente invention, le porte-satellites est relié à l'élément de stator par une liaison souple comportant un organe élastique. Cet organe élastique peut être conçu pour conférer une souplesse en direction axiale, radiale et en torsion à la liaison. Cette liaison souple assure également une transmission des efforts entre le porte-satellites et l'élément de stator. Au-delà d'un certain seuil d'effort en torsion et donc de couple autour de l'axe X, l'organe élastique est susceptible de se rompre. Pour éviter ceci, le porte-satellites comprend des dents qui sont aptes à coopérer par butée en direction circonférentielle avec l'élément de stator. Ces dents sont ainsi destinées à prendre le relai de la transmission des efforts dans le cas précité où les efforts de torsion transmis par le porte-satellites seraient trop importants et susceptibles de détériorer l'organe élastique. Les dents sont avantageusement libres de se déplacer radialement et axialement par rapport à l'élément de stator.

Les systèmes d'amortissement permettent d'absorber les vibrations auxquelles est soumis le porte-satellites en fonctionnement Le porte-cage selon l'invention peut comprendre les caractéristiques suivantes en combinaison les unes avec les autres suivant la définition dans les revendications dépendantes:
- le porte-satellites est monobloc ou comprend une cage et un porte-cage,
- le porte-cage comprend un corps annulaire s'étendant autour de l'axe X et portant la série de dents ainsi qu'une série de doigts en saillie s'étendant le long le long de l'axe X et répartis autour de cet axe X, chacun de ces doigts comportant à son extrémité libre opposée au corps un évidement de montage d'un axe de palier en vue de la liaison du porte-cage à la cage, cette cage comportant à sa périphérie des logements axiaux dans lequel sont reçus les doigts et qui sont traversés par les axes de paliers,
- les dents et les doigts sont au moins en partie formés d'une seule pièce avec le corps ; ceci permet de simplifier la fabrication et l'assemblage du porte-cage,
- le porte-satellites comprend un conduit interne de circulation d'huile et d'amenée d'huile jusqu'auxdites premières faces latérales en vue de la formation d'un film d'huile d'amortissement au niveau de chacune de ces faces ; on obtient ainsi un film d'amortissement du type « squeeze film » bien connu dans le domaine des turbomachines pour absorber des vibrations et éviter leur transmission entre deux pièces ; dans le cas d'utilisation de patins élastomères, le film d'amortissement n'est pas forcément nécessaire,
- ledit organe élastique a en section longitudinale une forme générale en U dont l'ouverture est orientée radialement vers l'extérieur, cet organe comportant un premier flasque annulaire appliqué axialement et fixé sur le porte-satellites, et un second flasque annulaire appliqué axialement et fixé sur l'élément de stator ; l'organe a ainsi une forme simple ; cette forme n'est toutefois pas limitative,

La présente invention concerne encore un module de turbomachine, comportant un ensemble tel que décrit ci-dessus, l'élément de stator comprenant deux viroles annulaires, respectivement externe et interne, s'étendant l'une autour de l'autre et autour dudit axe X, les viroles étant reliées l'une à l'autre par des bras, la virole interne s'étendant au moins en partie autour dudit porte-satellites et comportant à sa périphérie interne une série de logements s'étendant sensiblement radialement et dans lesquels sont engagés les dents du porte-satellites, ces dents étant aptes à se déplacer radialement dans ces logements et leurs premières faces latérales étant aptes à venir en butée en direction circonférentielle sur des secondes faces latérales en regard des logements.

Le module selon l'invention peut comprendre les caractéristiques suivantes en combinaison les unes avec les autres suivant la définition dans les revendications dépendantes:
- l'élément de stator peut comprendre des patins d'amortissement sur lesdites secondes faces latérales (en polymère ou tout autre matériau absorbant les vibrations), et/ou un conduit interne de circulation d'huile et d'amenée d'huile jusqu'auxdites secondes faces latérales en vue de la formation d'un film d'huile d'amortissement entre lesdites premières et secondes faces latérales ; on obtient ainsi un film d'amortissement du type « squeeze film », comme évoqué dans ce qui précède,
- lesdits bras comportent des bords d'attaque situés dans un plan P2 perpendiculaire audit axe X et des bords de fuite situés dans un plan P2' perpendiculaire audit axe X, les logements et les doigts étant situés dans un plan P1 situé entre les plans P2 et P2'; ceci peut permettre d'optimiser l'encombrement du module.

### Brève description des figures

D'autres caractéristiques et avantages ressortiront de la description qui suit d'un mode de réalisation non limitatif de l'invention en référence aux dessins annexés sur lesquels :
[Fig. 1] la figure 1 est une vue schématique en coupe axiale d'une turbomachine utilisant l'invention,
[Fig. 2] la figure 2 est une vue schématique en coupe axiale d'un réducteur à train épicycloïdal,
[Fig. 3] la figure 3 est une vue en perspective d'un ensemble cage et porte-cage formant un porte-satellites de réducteur,
[Fig. 4] la figure 4 est une vue en coupe axiale du porte-satellites de la figure 3,
[Fig. 5] la figure 5 est une vue à plus grande échelle d'un détail de la figure 4,
[Fig. 6] la figure 6 est une vue en coupe axiale d'un module de turbomachine, comportant un réducteur, un élément de stator, et un organe élastique de liaison du réducteur à l'élément de stator selon l'invention,
[Fig. 7] la figure 7 est une vue en perspective éclatée d'une partie du module de la figure 6,
[Fig. 8] la figure 8 est une vue en perspective d'une partie du module de la figure 6,
[Fig. 9] la figure 9 est une vue en coupe transversale d'une partie du module de la figure 6,
[Fig. 10] la figure 10 est une vue en coupe longitudinale et en perspective d'une partie du module de la figure 6,
[Fig. 11] la figure 11 est une vue à plus grande échelle d'un détail de la figure 9 et montre un doigt équipé de patins d'amortissement de vibrations, [Fig. 12] la figure 12 est une vue en perspective du doigt et des patins de la figure 11,
[Fig. 13] la figure 13 est une vue similaire à celle de la figure 11 et montre une variante de réalisation du dispositif d'amortissement de vibrations doté d'un système de « squeeze film » susnommé, et
[Fig. 14] la figure 14 est une vue similaire à celle de la figure 11 et montre une autre variante de réalisation du dispositif d'amortissement de vibrations doté d'un système de « squeeze film » susnommé.

### Description détaillée de l'invention

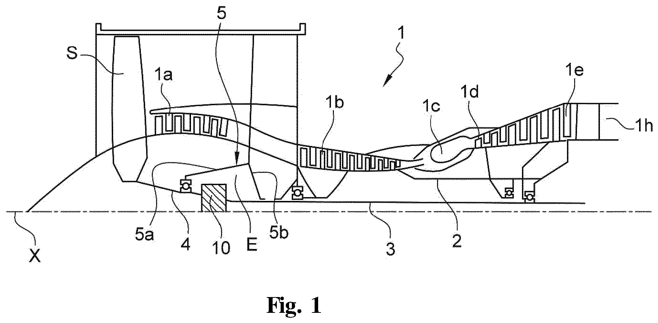

La figure 1 décrit une turbomachine 1 qui comporte, de manière classique, une soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La soufflante S est entraînée par un arbre de soufflante 4 qui est relié à l'arbre BP 3 au moyen d'un réducteur 10. Ce réducteur est généralement de type planétaire ou épicycloïdal.

Bien que la description qui suit concerne un réducteur du type planétaire ou épicycloïdal, elle s'applique également à un différentiel mécanique dans lequel ses trois composants essentiels, que sont le porte-satellites, la couronne et le solaire, sont mobiles en rotation, la vitesse de rotation de l'un de ces composants dépendant notamment de la différence de vitesses des deux autres composants.

Le réducteur 10 est positionné dans la partie avant de la turbomachine. Une structure fixe comportant schématiquement, ici, une partie amont 5a et une partie aval 5b qui compose le carter moteur ou stator 5 est agencée de manière à former une enceinte E entourant le réducteur 10. Cette enceinte E est ici fermée en amont par des joints au niveau d'un palier permettant la traversée de l'arbre de soufflante 4, et en aval par des joints au niveau de la traversée de l'arbre BP 3.

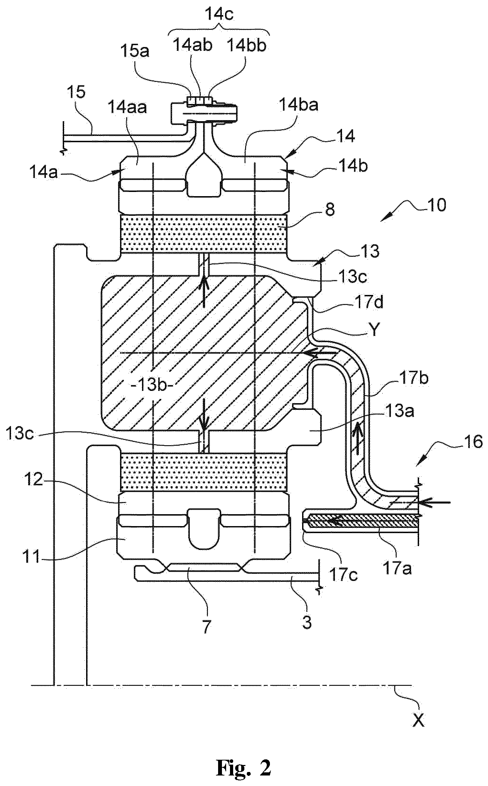

La figure 2 montre une partie d'un réducteur 10 qui peut prendre la forme de différentes architectures selon si certaines pièces sont fixes ou en rotation. En entrée, le réducteur 10 est relié à l'arbre BP 3, par exemple par l'intermédiaire de cannelures 7. Ainsi, l'arbre BP 3 entraîne un pignon planétaire appelé le solaire 11. Classiquement, le solaire 11 dont l'axe de rotation est confondu avec l'axe X de la turbomachine, entraîne une série de pignons appelés satellites 12, qui sont équirépartis sur le même diamètre autour de l'axe de rotation X. Ce diamètre est égal au double de l'entraxe de fonctionnement entre solaire 11 et satellites 12. Le nombre de satellites 12 est généralement défini entre trois et sept pour ce type d'application.

L'ensemble des satellites 12 est maintenu par un châssis appelé porte-satellites 13. Chaque satellite 12 tourne autour de son propre axe Y, et engrène avec la couronne 14.

En sortie du réducteur 10, nous avons :
o Dans une configuration épicycloïdale, l'ensemble des satellites 12 entraine en rotation le porte-satellite 13 autour de l'axe X de la turbomachine. La couronne 14 est fixée au carter moteur ou stator 5 via un porte-couronne 15 et le porte-satellites 13 est fixé à l'arbre de soufflante 4.
∘ Dans une configuration planétaire, l'ensemble des satellites 12 est maintenu par un porte-satellites 13 qui est fixé au carter moteur ou stator 5. Chaque satellite entraine la couronne qui est rapportée à l'arbre de soufflante 4 via un porte-couronne 15.

Chaque satellite 12 est monté libre en rotation à l'aide d'un palier 8, par exemple de type roulement ou palier hydrodynamique. Chaque palier 8 est monté sur un des axes 13a du porte-satellites 13 et tous les axes sont positionnés les uns par rapport aux autres à l'aide d'un ou plusieurs châssis structurels du porte-satellites 13. Il existe un nombre d'axes et de paliers égal au nombre de satellites. Pour des raisons de fonctionnement, de montage, de fabrication, de contrôle, de réparation ou de rechange les axes 13a et le châssis peuvent être séparés en plusieurs pièces.

Pour les mêmes raisons citées précédemment, la denture d'un réducteur peut être séparée en plusieurs hélices. Dans notre exemple nous détaillons le fonctionnement d'un réducteur 10 à plusieurs hélices avec une couronne séparée en deux demi-couronnes:
o Une demi-couronne avant 14a constituée d'une jante 14aa et d'une demi-bride de fixation 14ab. Sur la jante 14aa se trouve l'hélice avant de la denture du réducteur. Cette hélice avant engrène avec celle du satellite 12 qui engrène avec celle du solaire 11.
o Une demi-couronne arrière 14b constituée d'une jante 14ba et d'une demi-bride de fixation 14bb. Sur la jante 14ba se trouve l'hélice arrière de la denture du réducteur. Cette hélice arrière engrène avec celle du satellite 12 qui engrène avec celle du solaire 11.

La demi-bride de fixation 14ab de la couronne avant 14a et la demi-bride de fixation 14bb de la couronne arrière 14b forment la bride de fixation 14c de la couronne. La couronne 14 est fixée au porte-couronne 15 en assemblant la bride de fixation 14c de la couronne et la bride de fixation 15a du porte-couronne à l'aide d'un montage boulonné par exemple. Dans ce qui suit, une demi-bride pourra être appelée une bride.

Les flèches de la figure 2 décrivent l'acheminement de l'huile dans le réducteur 10. L'huile arrive dans le réducteur 10 depuis la partie stator 5 dans le distributeur 16 par différents moyens qui ne seront pas précisés dans cette vue car ils sont spécifiques à un ou plusieurs types d'architecture. Le distributeur 16 est séparé en deux parties en général chacune répétée du même nombre de satellites. Les injecteurs 17a ont pour fonction de lubrifier les dentures, et les bras 17b ont pour fonction de lubrifier les paliers 8. L'huile est amenée vers l'injecteur 17a pour ressortir par l'extrémité 17c afin de lubrifier les dentures. L'huile est également amenée vers chaque bras 17b et circule via la bouche d'alimentation 17d du palier 8. L'huile circule ensuite à travers l'axe 13a dans une ou des zones tampons 13b pour ensuite ressortir par des orifices 13c afin de lubrifier les paliers 8 des satellites.

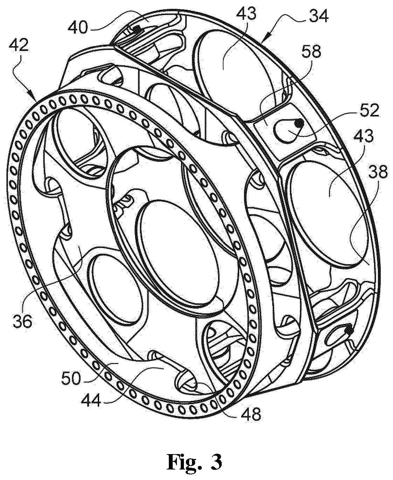

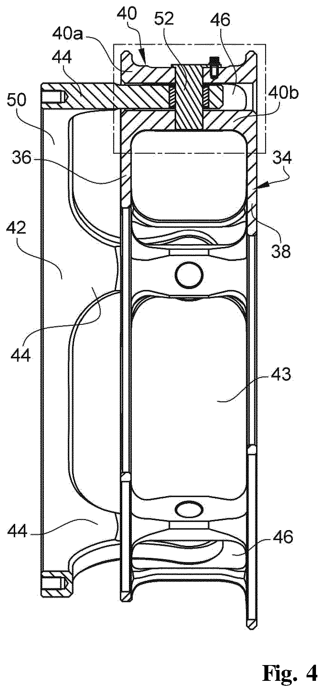

Les figures 3 à 5 représentent un porte-satellites 30 d'un réducteur planétaire, ce porte-satellites 30 pouvant être du type monobloc ou bien à cage et porte-cage comme dans l'exemple représenté.

Le porte-satellites 30 des figures 3 Xà 5 comporte une cage 34 et un porte-cage 42 reliés par des liaisons paliers .

La cage 34 comprend deux parois annulaires 36, 38 perpendiculaires à l'axe X et reliées à leur périphérie externe par une paroi cylindrique 40.

La paroi cylindrique 40 est ici du type à double peau et comprend une peau externe 40a interrompue par les lumières 43 et une peau interne 40b interrompue par les mêmes lumières 43. La peau externe 40a séparée par cinq lumières 43 forme cinq pontets extérieurs et la peau interne 40b séparée par cinq lumières 43 forme cinq pontets intérieurs. Chaque couple de pontets intérieur et extérieur forment une chape pour accueillir un doigt 44 du porte-cage 42. Autrement doit, les pontets de chaque couple définissent entre eux un logement 46 de réception d'un doigt 44 du porte-cage 42. Les pontets assurent la liaison structurelle entre les parois 36 et 38. Des lumières 48 de forme oblongue sont réalisées dans au moins une des parois 36 et 38 de telle sorte à laisser passer le doigt 44 entre les pontets intérieur et extérieur.

La paroi cylindrique 40 de la cage 34 comprend ainsi une rangée annulaire de logements 46. Ces logements 46 reçoivent les doigts axiaux 44 solidaires d'un corps annulaire 50 du porte-cage 42. Le corps 50 est situé à une extrémité axiale du porte-cage 42. Les doigts 44 s'étendent axialement depuis le corps 50 et sont engagés par translation axiale dans les logements 46.

L'épaisseur et la largeur ou la section radiale des doigts 44, des pontets, ainsi que le diamètre des axes 52 de liaison de ces doigts aux pontets, sont déterminés par calcul. L'espace restant est au mieux occupé entre chaque satellite en maîtrisant les rapports épaisseur/largeur. Les lumières 48 ne sont que la résultante et ont la même largeur que l'espace laissé entre les pontets extérieur et intérieur.

Chaque doigt 44 comprend, sensiblement en son milieu, un évidement 54 de montage d'un palier 56 destiné à être traversé par l'axe cylindrique 52 portée par la cage 34.

L'évidement 54 a une orientation sensiblement radiale par rapport à l'axe X. Il a une forme générale cylindrique. La cage 34 et l'axe 52 ont une épaisseur, mesurée dans une direction radiale par rapport à l'axe X, qui est inférieure à la distance inter-pontets ou l'épaisseur radiale de la lumière oblongue 48, de façon à pouvoir être engagées dans ce logement concomitamment avec le doigt 44 de support de ces pièces.

Chaque logement 46 est traversé par un axe 52 qui a une orientation sensiblement radiale par rapport à l'axe X. Chaque axe 52 comporte un corps cylindrique relié à une extrémité axiale, ici radialement interne, à une collerette 52b. L'axe 52 est ici engagé par translation radiale depuis l'extérieur à travers des orifices radiaux des pontets, sa collerette 52b étant destinée à venir en appui radial sur une face plane 58 du pontet extérieur de la cage 34. Après insertion de l'axe 52 dans les orifices des pontets, jusqu'à mise en appui de la collerette 52b sur le pontet extérieur, la collerette 52b est fixée à ce pontet par exemple par vissage.

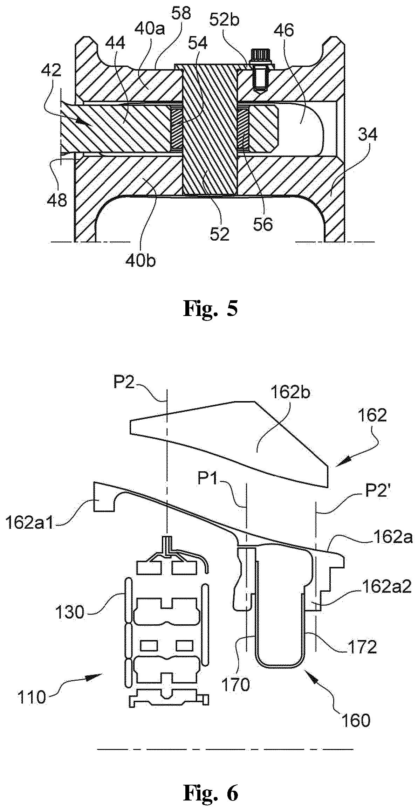

Les figures 6 à 12 représentent un premier mode de réalisation de l'invention qui concerne un ensemble comportant un porte-satellites 130 et un organe annulaire 160 élastiquement déformable de liaison de ce porte-satellites à un élément de stator 162 d'une turbomachine.

On comprend donc que l'invention s'applique à un réducteur de vitesse 110 à train planétaire, ce type de réducteur comportant un porte-satellites qui est fixe dans le repère moteur. Dans le cas présent, le porte-satellites 130 est relié à l'élément de stator 162 par une liaison souple formée par l'organe 160.

L'élément de stator 162 est un carter d'entrée dans l'exemple représenté. Ce carter d'entrée comprend deux viroles annulaires, respectivement externe 162b et interne 162a, s'étendant l'une autour de l'autre et autour de l'axe X. Les viroles sont reliées l'une à l'autre par des bras 164 s'étendant radialement par rapport à l'axe X.

Un carter d'entrée est, comme son nom l'indique, disposé en entrée du moteur et plus exactement en amont d'un compresseur de la turbomachine et en général en aval de la soufflante S. Les viroles 162a, 162b définissent entre elles une veine annulaire d'écoulement d'un flux de gaz, dit flux primaire, pour l'alimentation du compresseur.

Dans l'exemple représenté, la virole interne 162a comprend une bride annulaire de fixation 162a1 à son extrémité amont et une bride annulaire de fixation 162a2 à son extrémité aval.

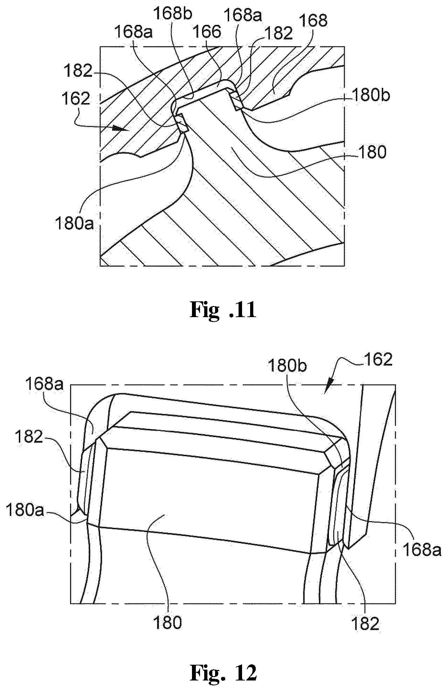

La virole interne 162a comprend en outre à sa périphérie interne des logements radiaux 166 de réception de dents 180 du porte-cage 142. Les logements 166 sont ici formés dans des plots 168 en saillie situés sur la surface radialement interne de la virole. Les plots 168 sont situés sur une même circonférence centrée sur l'axe X et comprennent chacun une encoche axiale les traversant axialement et débouchant radialement vers l'intérieur. Ces encoches définissent les logements 166 précités qui sont donc ouverts en direction axiale ainsi qu'en direction radiale vers l'intérieur. Ils sont délimités en direction circonférentielle par des faces latérales 168a en regard du plot 168 ainsi que par une face radialement externe 168b formée par le fond de l'encoche (figure 11). Chacune de ces faces 168a s'étend dans un plan passant par l'axe X.

L'organe 160 a en section une forme générale en U dont l'ouverture est orientée radialement vers l'extérieur. Cet organe comporte un premier flasque annulaire 170, ici amont, appliqué axialement et fixé sur le porte-satellites 130, et un second flasque annulaire 172, ici aval, configuré pour être appliqué axialement et fixé sur l'élément de stator 162 et plus exactement sur sa bride 162a2.

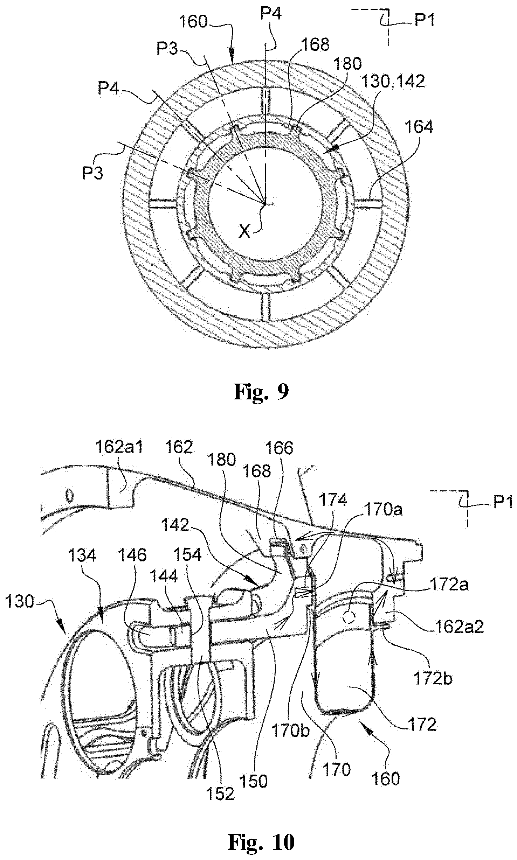

La périphérie externe du flasque 172 peut comprendre des orifices axiaux 172a de passage de moyens de fixation du type vis-écrou par exemple. Avantageusement, ce flasque 172 comprend une nervure cylindrique 172b orientée vers l'aval et configurée pour coopérer avec une surface cylindrique interne de la bride 162a2 pour assurer le centrage de l'organe 160 vis-à-vis de l'élément 162 (figure 10).

La périphérie externe du flasque 170 peut comprendre des orifices axiaux 170a de passage de vis qui sont vissées dans des orifices taraudés 174 du porte-satellites 130. Avantageusement, le flasque 170 comprend une nervure cylindrique 170b orientée vers l'amont et configurée pour coopérer avec une surface cylindrique interne du porte-satellites 130 pour assurer le centrage de l'organe 160 vis-à-vis du porte-satellites 130 (figure 10).

Le porte-satellites 130 est du type de celui représenté aux figures 3 à 5 et comprend une cage 134 et un porte-cage 142. Comme évoqué en référence à ces figures, le porte-cage 142 comprend un corps annulaire 150 s'étendant autour de l'axe X et portant une série de doigts 144 en saillie s'étendant le long de l'axe X et répartis autour de cet axe X. Chaque doigt 144 comporte à son extrémité libre opposée au corps un évidement 154 de montage d'un axe 152 en vue de la liaison du porte-cage 142 à la cage 134, cette cage 134 comportant à sa périphérie des logements axiaux 146 dans lequel sont reçus les doigts 144 et qui sont traversés par les axes 152.

Dans le mode de réalisation représenté, le corps 150 porte en outre une série de dents 180 en saillie s'étendant sensiblement radialement vers l'extérieur par rapport à l'axe X, et destinées à être logés dans les logements 166 précités de l'élément de stator 162. Les dents 180 et les doigts 144 sont ici formés d'une seule pièce avec le corps.

Les dents 180 et les orifices taraudés 174 sont ici sensiblement situés dans un même plan P1 perpendiculaire à l'axe X (figures 6 et 10). Les bras 164 comportent des bords d'attaque et de fuite disposés respectivement dans des plansP2 et P2' perpendiculaires à l'axe X, le plan P1 étant situé entre ces plans P2 et P2'.

Chaque dent 180 comporte deux faces latérales 180a, 180b opposées aptes à coopérer par butée en direction circonférentielle avec les faces latérales 168a en regard de l'élément de stator 162 (figure 11). Chacune de ces faces 180a, 180b s'étend dans un plan passant par l'axe X.

Comme on le voit à la figure 11, les faces 180a, 180b ne sont pas directement au contact des faces 168a mais sont espacées en direction circonférentielle de ces faces. Dans l'exemple représenté, un patin 182 est rapporté sur chacune des faces 180a, 180b, par exemple dans un renfoncement de cette face.

Le patin 182 a pour fonction d'isoler la dent 180 et donc le porte-satellites 130 de l'élément de stator 162 pour éviter la transmission de vibrations entre ces pièces en fonctionnement. Le patin 182 est avantageusement conçu pour amortir les vibrations auxquelles le porte-satellites est soumis en fonctionnement pour éviter de les transmettre à l'élément 162. Le patin 182 peut être réalisé dans tout matériau approprié pour réaliser cette fonction et par exemple en élastomère, composite, etc.

Comme on le voit à la figure 11, l'extrémité radialement externe de chaque dent 180 est située à distance radiale de la face 168b de façon à ce que la dent puisse coulisser en direction radiale dans le logement 166. Les patins 182 portés par la dent 180 glissent alors sur les faces latérales 168a du logement 166.

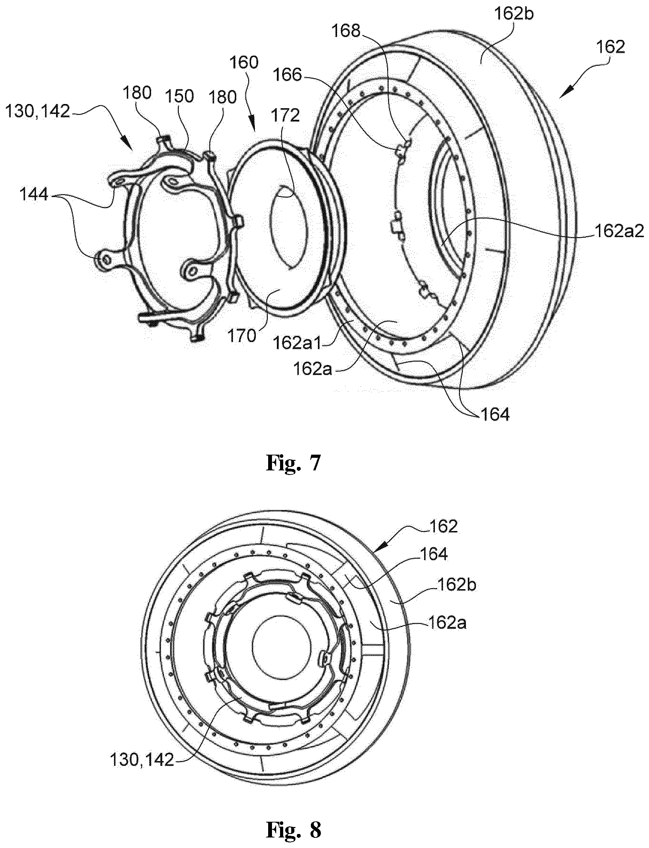

Comme on peut le voir aux figures 7 à 9, le nombre de dents 180 est différent du nombre de doigts 144. Le nombre de dents 180 est ici de 8 et est ici supérieur au nombre de doigts 144 qui est ici de 5. Avantageusement, le nombre de dents 180 est égal au nombre de bras 164 de l'élément de stator 162 et les dents sont disposées en fonction de ces bras 164. Dans l'exemple représenté à la figure 9, les dents 180 sont régulièrement réparties et diamétralement opposées deux à deux. C'est la même chose pour les bras de l'élément 162. Chaque dent 180 est située dans un plan P3 passant par l'axe X et chaque bras est situé dans un plan P4 passant par l'axe X. Chaque plan P3 est situé à mi-chemin entre deux plans P4 adjacents. Chaque plan P4 est situé à mi-chemin entre deux plans P3 adjacents.

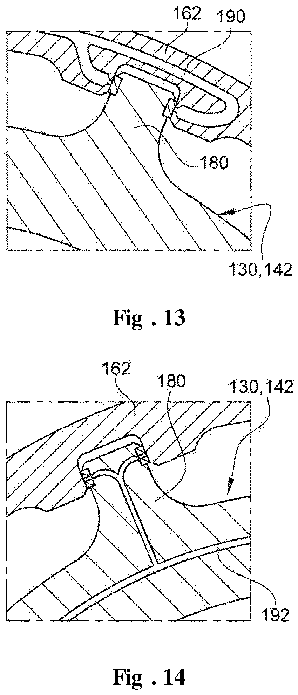

Les figures 13 et 14 montrent des variantes de réalisation de l'invention dans lesquelles les patins 182 sont associés (mais pourraient être remplacés) à des films d'huile d'amortissement. Des films d'huile sont ainsi destinés à être formés entre les faces 168a, 180a, 180b, ou entre les patins 182 et les faces 168a. Pour cela, l'élément de stator 162 peut comprendre un conduit interne 190 de circulation d'huile et d'amenée d'huile jusqu'aux faces 168a, 180a, 180b, comme cela est représenté à la figure 13. Dans la variante représentée à la figure 14, le porte-satellites 130 comprend un conduit interne 192 de circulation d'huile et d'amenée d'huile jusqu'aux faces 168a, 180a, 180b.

La figure 10 montre, par l'intermédiaire de flèches en traits pointillés, la transmission des efforts en fonctionnement entre le porte-satellites 130 et en particulier le porte-cage 142 et l'élément de stator 162. Des efforts, en particulier en torsion, transitent depuis le porte-cage 142 par l'organe 160, qui peut se déformer élastiquement, jusqu'à l'élément de stator 162. Dans le cas où ces efforts dépasseraient un certain seuil et risqueraient d'endommager l'élément 162, le porte-cage 142 prendrait appui en direction circonférentielle sur l'élément 162 par le biais des dents 180 et des plots 168, ce qui permettrait de transmettre ces efforts directement du porte-cage à l'élément 162 sans solliciter l'organe 160.

## Revendications

1. Ensemble comportant un porte-satellites (130) de réducteur de vitesse (110) à train planétaire, un organe annulaire (160) élastiquement déformable et un élément de stator (162), pour une turbomachine, en particulier d'aéronef,
- le porte-satellites (130) ayant une forme générale annulaire autour d'un axe X, et
- l'organe annulaire (160) s'étendant autour de l'axe X, cet organe étant fixé audit porte-satellites et audit élément de stator (162) en vue d'assurer une liaison souple entre le porte-satellites et ledit élément de stator,
**caractérisé en ce que** le porte-satellites porte une série de dents (180) en saillie s'étendant sensiblement radialement vers l'extérieur par rapport audit axe X, chacune de ces dents comportant des premières faces latérales (180a, 180b) opposées dans des plans passant par l'axe X et aptes à coopérer par butée en direction circonférentielle avec ledit élément de stator, des systèmes d'amortissement de vibrations, de type patins d'amortissement de vibration (182) et/ou film d'huile d'amortissement, étant intercalés entre lesdites premières faces et ledit élément de stator.

2. Ensemble selon la revendication précédente, dans lequel le porte-satellites (130) est monobloc ou comprend une cage (134) et un porte-cage (142).

3. Ensemble selon la revendication précédente, dans lequel le porte-cage (142) comprend un corps annulaire (150) s'étendant autour de l'axe X et portant la série de dents (180) ainsi qu'une série de doigts (144) en saillie s'étendant le long le long de l'axe X et répartis autour de cet axe X, chacun de ces doigts comportant à son extrémité libre opposée au corps un évidement (154) de montage d'un axe (152) en vue de la liaison du porte-cage à la cage, cette cage (134) comportant à sa périphérie des logements axiaux (146) dans lequel sont reçus les doigts (144) et qui sont traversés par les axes (152).

4. Ensemble selon la revendication précédente, dans lequel les dents (180) et les doigts (144) sont au moins en partie formés d'une seule pièce avec le corps (150).

5. Ensemble selon l'une des revendications précédentes, dans lequel le porte-satellites (130) comprend un conduit interne (192) de circulation d'huile et d'amenée d'huile jusqu'auxdites premières faces latérales (180a, 180b) en vue de la formation d'un film d'huile d'amortissement au niveau de chacune de ces faces.

6. Ensemble selon l'une des revendications précédentes, dans lequel ledit organe (160) a en section une forme générale en U dont l'ouverture est orientée radialement vers l'extérieur, cet organe comportant un premier flasque annulaire (170) appliqué axialement et fixé sur le porte-satellites (130), et un second flasque annulaire (172) appliqué axialement et fixé sur l'élément de stator (162).

7. Module de turbomachine, comportant un ensemble selon l'une des revendications précédentes, l'élément de stator (162) comprenant deux viroles annulaires, respectivement externe (162b) et interne (162a), s'étendant l'une autour de l'autre et autour dudit axe X, les viroles étant reliées l'une à l'autre par des bras (164), la virole interne s'étendant au moins en partie autour dudit porte-satellites (130) et comportant à sa périphérie interne une série de logements (166) s'étendant sensiblement radialement et dans lesquels sont engagés les dents (180) du porte-satellites, ces dents étant aptes à se déplacer radialement dans ces logements et leurs premières faces latérales (180a, 180b) étant aptes à venir en butée en direction circonférentielle sur des secondes faces latérales (168a) en regard des logements.

8. Module selon la revendication 7, dans lequel l'élément de stator (162) comprend des patins d'amortissement sur lesdites secondes faces latérales (168a), et/ou un conduit interne (190) de circulation d'huile et d'amenée d'huile jusqu'auxdites secondes faces latérales (168a) en vue de la formation d'un film d'huile d'amortissement entre lesdites premières et secondes faces latérales (168a, 180a, 180b).

9. Module selon la revendication 7 ou 8, dans lequel lesdits bras (164) comportent des bords d'attaque situés dans un plan P2 perpendiculaire audit axe X et des bords de fuite situés dans un plan P2' perpendiculaire audit axe X, les logements (166) et les doigts (180) étant situés dans un plan P1 situé entre les plans P2 et P2'.

## Patentansprüche

1. Baugruppe, die einen Planetenträger (130) eines Planeten-Untersetzungsgetriebes (110), ein ringförmiges Organ (160), das elastisch verformbar ist, und ein Statorelement (162) umfasst, für ein Turbotriebwerk, insbesondere eines Luftfahrzeugs,
- wobei der Planetenträger (130) eine allgemeine Ringform um eine X-Achse herum aufweist, und
- sich das ringförmige Organ (160) um die X-Achse herum erstreckt, wobei dieses Organ am Planetenträger und am Statorelement (162) fixiert ist, um für eine flexible Verbindung zwischen dem Planetenträger und dem Statorelement zu sorgen,
**dadurch gekennzeichnet, dass** der Planetenträger eine Reihe von überstehenden Zähnen (180) trägt, die sich im Wesentlichen radial in Bezug auf die X-Achse nach außen erstrecken, wobei jeder dieser Zähne erste gegenüberliegende Seitenflächen (180a, 180b) in den Ebenen umfasst, die über die X-Achse verlaufen und imstande sind, durch Anschlag in Umfangsrichtung mit dem Statorelement zusammenzuwirken, wobei Schwingungsdämpfungssysteme, vom Typ Schwingungsdämpfungsschlitten (182) und/oder Dämpfungsölfilm zwischen den ersten Seiten und dem Statorelement eingesetzt sind.

2. Baugruppe nach dem vorstehenden Anspruch, wobei der Planetenträger (130) einteilig ist oder einen Käfig (134) und einen Käfigträger (142) umfasst.

3. Baugruppe nach dem vorstehenden Anspruch, wobei der Käfigträger (142) einen ringförmigen Körper (150) umfasst, der sich um die X-Achse herum erstreckt und die Reihe von Zähnen (180), sowie eine Reihe von überstehenden Fingern (144) trägt, die sich entlang der X-Achse erstrecken, und um diese X-Achse herum verteilt sind, wobei jeder dieser Finger an seinem freien Ende gegenüber dem Körper eine Aussparung (154) zum Montieren einer Achse (152) zum Verbinden des Käfigträgers mit dem Käfig umfasst, wobei dieser Käfig (134) an seinem Umfang axiale Aufnahmen (146) umfasst, in denen die Finger (144) aufgenommen werden, und die von den Achsen (152) durchquert werden.

4. Baugruppe nach dem vorstehenden Anspruch, wobei die Zähne (180) und die Finger (144) mindestens teilweise in einem Stück mit dem Körper (150) gebildet sind.

5. Baugruppe nach einem der vorstehenden Ansprüche, wobei der Planetenträger (130) eine innere Leitung (192) zum Zirkulieren von Öl und zum Zuführen von Öl bis zu den ersten Seitenflächen (180a, 180b) zum Bilden eines Dämpfungsölfilms im Bereich von jeder dieser Flächen umfasst.

6. Baugruppe nach einem der vorstehenden Ansprüche, wobei das Organ (160) als Querschnitt eine allgemeine U-Form aufweist dessen Öffnung radial nach außen gerichtet ist, wobei dieses Organ einen ersten ringförmigen Flansch (170) umfasst, der axial angelegt ist und am Planetenträger (130) fixiert ist, und einen zweiten ringförmigen Flansch (172), der axial angelegt ist und am Statorelement (162) fixiert ist.

7. Turbotriebwerkmodul, das eine Baugruppe nach einem der vorstehenden Ansprüche, das Statorelement (162), das zwei ringförmige, jeweils äußere (162b) und innere (162a) Klemmringe umfasst, die sich umeinander und um die X-Achse erstrecken, umfasst, wobei die Klemmringe durch Arme (164) miteinander verbunden sind, wobei sich der innere Klemmring mindestens teilweise um den Planetenträger (130) erstreckt und an seinem Innenumfang eine Reihe von Aufnahmen (166) umfasst, die sich im Wesentlichen radial erstrecken, und in welche die Zähne (180) des Planetenträgers eingreifen, wobei diese Zähne imstande sind, sich radial in diesen Aufnahmen zu verschieben und ihre ersten Seitenflächen (180a, 180b) imstande sind, auf Anschlag in Umfangsrichtung auf zweiten Seitenflächen (168a) gegenüber den Aufnahmen zu gelangen.

8. Modul nach Anspruch 7, wobei das Statorelement (162) Dämpfungsschlitten auf den zweiten Seitenflächen (168a), und/oder eine innere Leitung (190) zum Zirkulieren von Öl und zum Zuführen von Öl bis zu den zweiten Seitenflächen (168a) zum Bilden eines Dämpfungsölfilms zwischen den ersten und zweiten Seitenflächen (168a, 180a, 180b) umfasst.

9. Modul nach Anspruch 7 oder 8, wobei die Arme (164) Vorderkanten, die sich in einer Ebene P2 senkrecht zur X-Achse befinden, und Hinterkanten umfassen, die sich in einer Ebene P2' senkrecht zur X-Achse, befinden, wobei sich die Aufnahmen (166) und die Finger (180) in einer Ebene P1 befinden, die sich zwischen den Ebenen P2 und P2' befindet.

## Claims

1. An assembly comprising a planet carrier (130) for a planetary gear (110), an elastically deformable annular member (160) and a stator element (162), for a turbomachine, in particular for an aircraft,
- the planet carrier (130) having a generally annular shape around an axis X, and
- the annular member (160) extending around the axis X, this member being secured to the planet carrier and to said stator element (162) in order to ensure a flexible connection between the planet carrier and said stator element,
**characterized in that** the planet carrier carries a series of protruding teeth (180) extending substantially radially outwards with respect to said axis X, each of these teeth comprising first lateral faces (180a, 180b) opposed in planes passing through the axis X and adapted to cooperate by abutment in the circumferential direction with said stator element, vibration damping systems, of the type vibration damping pads (182) and/or damping oil film, being interposed between said first faces and said stator element.

2. The assembly according to the preceding claim, wherein the planet carrier (130) is a single piece or comprises a cage (134) and a cage carrier (142).

3. The assembly according to the preceding claim, wherein the cage carrier (142) comprises an annular body (150) extending around the axis X and carrying the series of teeth (180) as well as a series of protruding fingers (144) extending along the axis X and distributed around this axis X, each of these fingers comprising at its free end opposite the body a recess (154) for mounting a shaft (152) in order to connect the cage holder to the cage, this cage (134) comprising at its periphery axial housings (146) in which the fingers (144) are received and which are traversed by the shafts (152).

4. The assembly according to the preceding claim, wherein the teeth (180) and the fingers (144) are at least partly formed in one piece with the body (150).

5. The assembly according to one of the preceding claims, wherein the planet carrier (130) comprises an internal conduit (192) for circulating oil and supplying oil to said first lateral faces (180a, 180b) in order to form a damping oil film at each of these faces.

6. The assembly according to one of the preceding claims, wherein said member (160) has a generally U-shaped cross-section with the opening facing radially outwards, this member comprising a first annular flange (170) applied axially and secured to the planet carrier (130), and a second annular flange (172) applied axially and secured to the stator element (162).

7. A turbomachine module, comprising an assembly according to one of the preceding claims, the stator element (162) comprising two annular shells, respectively external (162b) and internal (162a), extending around each other and around said axis X, the shells being connected to each other by arms (164), the internal shell extending at least partly around said planet carrier (130) and comprising at its internal periphery a series of housings (166) extending substantially radially and in which the teeth (180) of the planet carrier are engaged, these teeth being capable of moving radially in these housings and their first lateral faces (180a, 180b) being capable of abutting in the circumferential direction against second lateral faces (168a) opposite the housings.

8. The module according to claim 7, wherein the stator element (162) comprises damping pads on said second lateral faces (168a), and/or an internal conduit (190) for circulating oil and supplying oil to said second lateral faces (168a) in order to form a damping oil film between said first and second lateral faces (168a, 180a, 180b).

9. The module according to claim 7 or 8, wherein said arms (164) comprise leading edges located in a plane P2 perpendicular to said axis X and trailing edges located in a plane P2' perpendicular to said axis X, the housings (166) and the fingers (180) being located in a plane P1 located between the planes P2 and P2'.
